# EUROPEAN PATENT APPLICATION

(11) **EP 4 693 130 A1**
(43) Date of publication of application: **11.02.2026**
(21) Application number: 23930490.0
(22) Date of filing: 29.03.2023
(51) Int. Cl.: G06Q 10/0633

(54) **EXTRACTION METHOD, INFORMATION PROCESSING DEVICE, AND EXTRACTION PROGRAM**

(71) Applicant: FUJITSU LIMITED, Kawasaki-shi, Kanagawa 211-8588 (JP)
(72) Inventor: MIZOUCHI, Tsuyoshi, Kawasaki-shi, Kanagawa 211-8588 (JP); AMEMIYA, Satoshi, Kawasaki-shi, Kanagawa 211-8588 (JP); KURAKI, Kensuke, Kawasaki-shi, Kanagawa 211-8588 (JP); INOMATA, Akihiro, Kawasaki-shi, Kanagawa 211-8588 (JP)
(74) Representative: Hoffmann Eitle
(86) International application number: PCT/JP2023/013022
(87) International publication number: WO 2024/201852

(57) **Abstract**

An extraction method executes processing of, upon acquiring a first measure that is a measure including a conditional branch and a node coupled by an oriented edge and a first node condition set of the first measure that is a node condition set in which a node is associated with a condition allocated to the node, referring to a storage unit that stores a second measure and a second node condition set of the second measure and extracting a difference in nodes associated with the same condition between the first measure and the second measure.

## Description

### Technical Field

The present invention relates to an extraction method, an information processing apparatus, and an extraction program.

### Background Art

As one workflow, there is known a flow graph of a measure in which a flow of allocating an object such as human as a target of a measure in various fields such as medical care, nursing care, and administration to a service or the like for achieving a purpose of the measure is schematized.

When planning such a measure, from the viewpoint of administrative (political) easiness of execution, it is important whether similar measures have been taken in the past. Accordingly, importance of comparing a flow graph of a measure as a draft with a flow graph of an existing measure as a reference has increased.

For example, the following prediction device has been proposed as one of techniques for supporting comparison between flow graphs of measures (refer to, for example, Patent Literature 1). For example, the prediction device propagates a degree of a measure effect from a first node as a base point to a second node in a graph including a plurality of links and nodes, the plurality of links coupling the nodes to each other based on similarity therebetween. As a result, even when the number of targets for which measures are actually implemented is small, effective measures are predicted and recommended to other targets for which measures are not implemented.

### Citation List

### Patent Literature

Patent Document 1: International Publication Pamphlet No. WO 2019/208319

### Summary of invention

### Technical Problem

However, the above prediction device predicts merely an effect of introducing a measure. Accordingly, there is an aspect in which, even when the effect of the measure recommended by the above prediction device is high, it is difficult to determine whether introduction of the measure is easy or difficult in an entity to which the measure is recommended, for example, a local government.

In one aspect, an object of the present invention is to provide an extraction method, an information processing apparatus, and an extraction program capable of presenting easiness of introduction of a measure.

### Solution to Problem

According to an aspect of the embodiment of the invention, an extraction method causes a computer to execute processing of, upon acquiring a first measure that is a measure including a conditional branch and a node coupled by an oriented edge and a first node condition set of the first measure that is a node condition set in which a node is associated with a condition allocated to the node, referring to a storage unit that stores a second measure and a second node condition set of the second measure and extracting a difference in nodes associated with the same condition between the first measure and the second measure.

### Advantageous Effects of Invention

According to one embodiment, it is possible to present easiness of introduction of a measure.

### Brief Description of Drawings

FIG. 1 is a block diagram illustrating a functional configuration example of a server device.
FIG. 2 is a diagram illustrating a flow graph of a measure.
FIG. 3 is a diagram illustrating a specific example of the flow graph of the measure.
FIG. 4 is a diagram illustrating a reference example of an existing measure in a data infrastructure.
FIG. 5 is a diagram illustrating an example of a usage scene of measure planning.
FIG. 6 is a schematic diagram illustrating a registration example of measure information in a measure DB.
FIG. 7 is a diagram illustrating a specific example of a measure flow.
FIG. 8 is a diagram illustrating an example of intervention condition sets.
FIG. 9 is a diagram illustrating a specific example of a draft flow.
FIG. 10 is a diagram illustrating an example of intervention condition sets.
FIG. 11 is a diagram illustrating a collation example of intervention condition sets.
FIG. 12 is a diagram illustrating an extraction example of a difference in resource.
FIG. 13 is a diagram illustrating an example of items output by an output unit.
FIG. 14 is a diagram illustrating a display example of a client terminal.
FIG. 15 is a flowchart illustrating a procedure of registration processing.
FIG. 16 is a flowchart illustrating a procedure of first extraction processing.
FIG. 17 is a flowchart illustrating a procedure of second extraction processing.
FIG. 18 is a diagram illustrating a hardware configuration example.

### Description of Embodiments

Hereinafter, a mode (hereinafter, described as an "embodiment") for implementing an extraction method, an information processing apparatus, and an extraction program according to the present application will be described with reference to the accompanying drawings. Each embodiment merely illustrates examples and aspects, and a numerical value, a function range, a usage scene, and the like are not limited by such an example. Each of the embodiments can be adaptively combined with each other within a range in which processing contents do not contradict each other.

### <First Embodiment>

### <System Configuration>

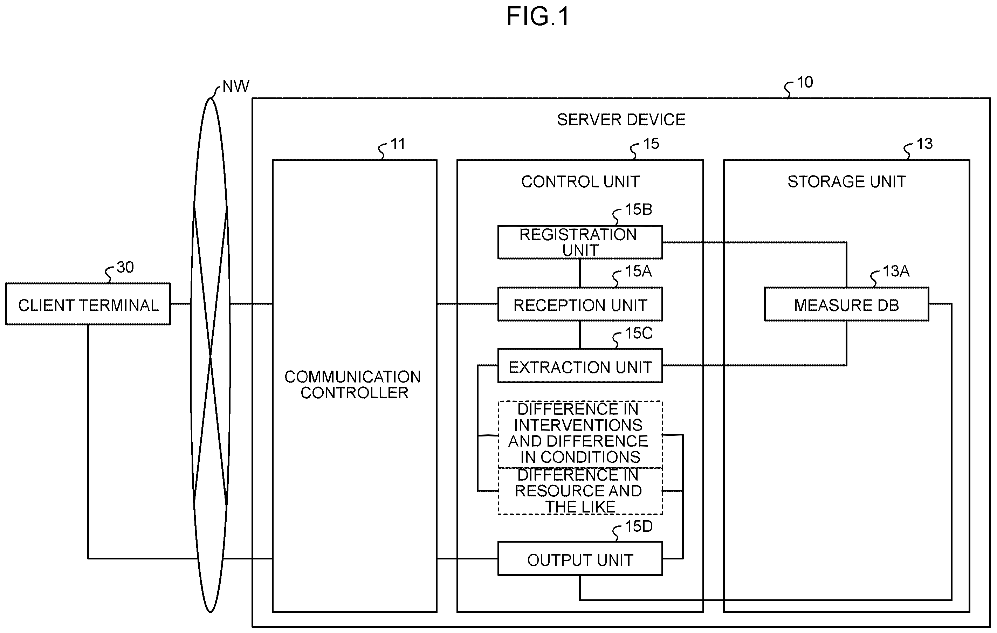

FIG. 1 is a block diagram illustrating a functional configuration example of a server device 10. The server device 10 illustrated in FIG. 1 provides a data infrastructure platform capable of sharing, crossreferencing, and updating flow data of measures.

For example, the server device 10 can provide a function of the above-described data infrastructure platform as a cloud service by executing platform as a service (PaaS) type middleware or software as a service (SaaS) type application.

As illustrated in FIG. 1, the server device 10 can be communicably connected to a client terminal 30 via a network NW. For example, the network NW may be any type of communication network such as the Internet or a local area network (LAN) regardless of whether the network NW is wired or wireless. Note that FIG. 1 illustrates an example in which one client terminal 30 is connected to one server device 10, but any number of client terminals 30 may be connected to one server device 10.

The client terminal 30 is a terminal device to which the above-described data infrastructure is provided. For example, the client terminal 30 can be used by a measure planner as an example of an entity that implements a measure, for example, a person involved with a local government. Note that, as an example, the client terminal 30 may be realized by any computer such as a personal computer, a smartphone, a tablet terminal, or a wearable terminal.

### <Flow Graph of Measure>

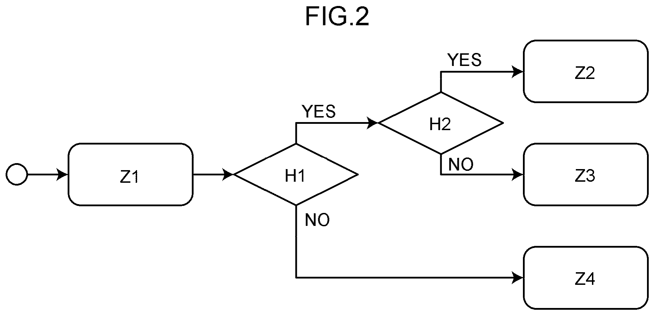

A flow graph of a measure is illustrated in FIG. 2. FIG. 2 is a diagram illustrating the flow graph of the measure. Z1, Z2, Z3, and Z4 illustrated in FIG. 2 indicate, for example, services provided by an administrator to a user. Such services may be referred to as "service implementation components". In the medical field as an example, specific examples of the services include "intervention" in which medical examination, examination by a specialist, and the like are allocated to an object as a target of a measure, such as a resident, and "no intervention" such as follow-up observation and the like, but the specific examples are not limited to the measures in the medical field.

H1 and H2 indicate, for example, conditional branches including conditions. Such branches may be referred to as "conditional branch components". In the medical field as an example, specific examples of the conditions include an estimated glemerular filtration rate (eGFR) being less than a threshold value, a hemoglobin A1c value (HbA1c) being less than a threshold value, a urinary protein value being equal to or greater than a threshold value, and the like, but the specific examples are not limited to conditions in the medical field.

Z1, Z2, Z3, Z4, H1, and H2 may be each referred to as a "component". Such a "component" may correspond to an example of a "node" in terms of graph data. A connection between nodes may correspond to an example of an "edge" such as an "oriented edge".

Note that, in the present embodiment, measure planning in the medical field will be described as an example, but the present embodiment is not limited thereto. The above-described embodiments may be used in various measure planning such as work, tests, and questionnaires having conditional branches. Also then, the same operations and effects as those of the above-described embodiment can be obtained.

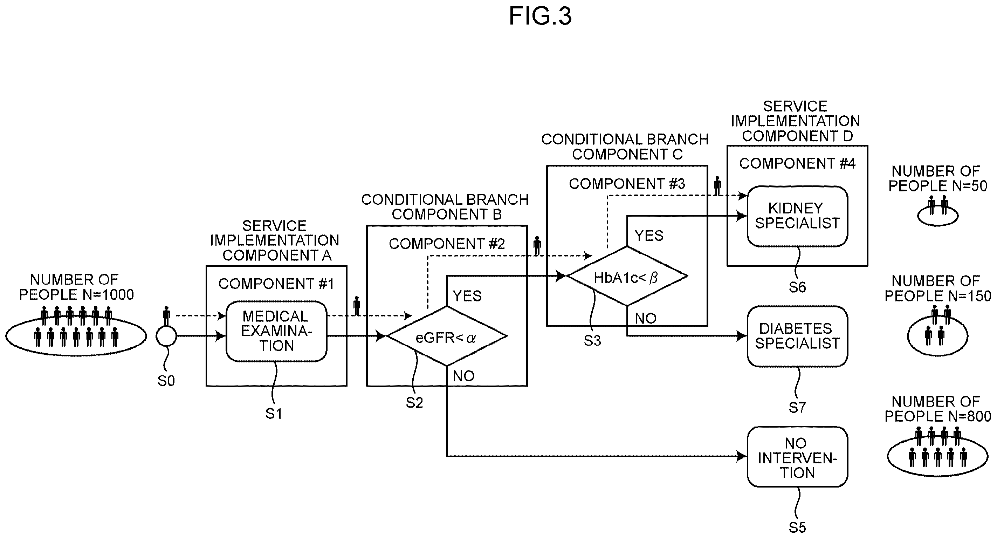

FIG. 3 is a diagram illustrating a specific example of the flow graph of the measure. As illustrated in FIG. 3, a measure is modeled as a workflow configured of a combination of components such as conditional branches and service implementation. Then, the number of people to receive each service is output from a model trained by accumulating information and parameters on a flow of people from actual values when each conditional branch component is used.

In the example illustrated in FIG. 3, the number of people N = 1000 is input at reference numeral S0. In S1, a component #1 as a service implementation component A is set to "medical examination". In S2, a component #2 as a conditional branch component B is set to "eGFR < α". When "eGFR < α" is not satisfied (refer to NO route of the reference numeral S2), it is determined as "no intervention" from a specialist for the citizen as indicated by reference numeral S5.

Meanwhile, when "eGFR < α" is satisfied (refer to YES route of reference numeral S2), a component #3 as a conditional branch component C is set to "HbA1c < β" as indicated by reference numeral S3. When "HbA1c < β" is satisfied (refer to YES route of reference numeral S3), a component #4 as a conditional branch component D is set to "kidney specialist" and it is determined that intervention of "kidney specialist" is to be provided for the citizen as indicated by reference numeral S6. Meanwhile, when "HbA1c < β" is not satisfied (refer to NO route of reference numeral S3), it is determined that intervention of "diabetes specialist" is to be provided for the citizen as indicated by reference numeral S7.

In the example illustrated in FIG. 3, as indicated by arrows, the number of people flowing in the order of the component #1, the component #2, the component #3, and the component #4 is predicted. For example, in the flow graph of the measure illustrated in FIG. 3, a result of allocating the number of people N = 1000 to interventions Z2 to Z4 is described as follows. 50 people are allocated to the intervention Z2. 150 people are allocated to the intervention Z3. 800 people are allocated to the intervention Z4.

Hereinafter, a flow graph of a measure may be abbreviated as "measure flow". A measure flow corresponding to a draft among the measure flows may be described as "draft flow", and a measure flow corresponding to an existing measure may be described as "existing measure flow". Note that the term "draft" as used herein refers to a measure designated as a draft in measure planning, and for example, one of existing measures may be designated as it is, a changed measure in which a part of the existing measure is changed may be designated, or a new measure that is newly created may be designated.

### <Data Infrastructure>

In the above data infrastructure, a measure flow may be shared in any framework. Merely as an example, the above-described data infrastructure can share a measure flow between organizations in the world, for example, public organizations such as local governments.

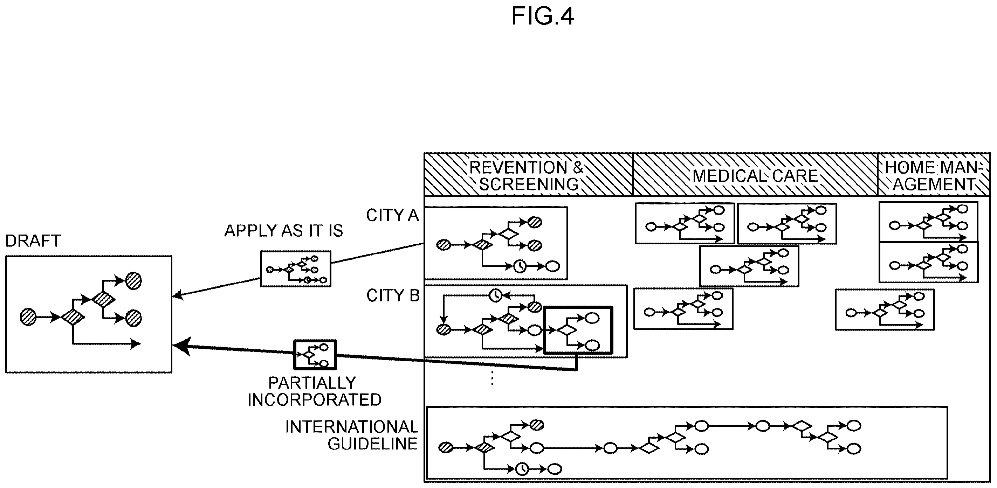

FIG. 4 is a diagram illustrating a reference example of the existing measure in the data infrastructure. As illustrated in FIG. 4, a measure planner can refer to templates of the existing measures around the world collected in the above-described data infrastructure via the client terminal 30. For example, a draft can be updated by incorporating all or a part of the existing measures similar to the draft among the templates collected in the data infrastructure. In the example illustrated in FIG. 4, a preventive and screening measure in a city A may be introduced as it is, or a part of the preventive and screening measure in a city B may be incorporated.

As described above, when planning a measure, from the viewpoint of administrative (political) easiness of execution, it is important whether similar measures have been taken in the past. Accordingly, importance of comparing a flow graph of a measure as a draft with a flow graph of an existing measure as a reference has increased.

### <One Aspect of Problem>

As described in Background, the related art represented by the above prediction device predicts merely an effect of introducing a measure. Accordingly, there is an aspect in which, even when the effect of the measure recommended by the above prediction device is high, it is difficult to determine whether introduction of the measure is easy or difficult in an entity to which the measure is recommended, for example, a local government.

That is, according to the above-described related art, when referring to a measure in measure planning, a difference indicating which parts of measure flows are different between a draft and a reference measure is to be determined by a user of the data infrastructure such as a measure planner. Accordingly, it may be difficult to determine a difference in measure flows between the draft and the reference measure. Under such a situation in which a difference in measure flows is unclear, it is difficult to determine whether introduction is easy or difficult. Note that "reference measure" mentioned herein may not be an existing measure that is already implemented, and may be a measure other than an existing measure.

### <One Aspect of Approach for Solving Problems>

Therefore, from an aspect of presenting easiness of introduction of a measure, the server device 10 according to the present embodiment provides an extraction function of extracting a difference in interventions for a common condition between a draft flow and a reference measure flow or a difference in conditions for a common intervention. According to such an extraction function, a difference in measure flows between a draft and a similar measure is extracted, so that it is possible to present a material for determining whether introduction is easy or difficult. Therefore, according to the server device 10 of the present embodiment, it is possible to present easiness of introduction of a measure.

Here, an example is described in which the function of the data infrastructure platform and the extraction function described above are provided as cloud services, but the present invention is not limited thereto. For example, the function of the data infrastructure platform and the extraction function may be provided onpremises. A description is given as to an example in which the function of the data infrastructure platform and the extraction function are provided in a client server system, but the present invention is not limited thereto. For example, an application that operates on the client terminal 30 may cause the client terminal 30 to execute processing corresponding to the extraction function, thereby providing the extraction function in a stand-alone manner.

### <Configuration of Server Device 10>

FIG. 1 illustrates schematic blocks related to a data infrastructure and an extraction function provided in the server device 10. As illustrated in FIG. 1, the server device 10 includes a communication controller 11, a storage unit 13, and a control unit 15. Note that FIG. 1 merely illustrates a part of functional units related to the data infrastructure and the extraction function described above, and functional units other than those illustrated may be provided in the server device 10.

The communication controller 11 is a functional unit that controls communication with other devices such as the client terminal 30. As an example, the communication controller 11 may be realized by a network interface card such as a LAN card. As one aspect, the communication controller 11 receives a registration request of measure information including a measure flow or an extraction request of a difference in a draft and an existing measure from the client terminal 30, or outputs an extraction result of the difference in the draft and the existing measure to the client terminal 30.

The storage unit 13 is a functional unit that stores various types of data. As an example, the storage unit 13 is realized by an internal, external, or auxiliary storage of the server device 10. For example, the storage unit 13 stores a measure database (DB) 13A. Note that the measure DB will be described with scenes in which reference, generation, or registration is executed.

The control unit 15 is a functional unit that performs overall control of the server device 10. For example, the control unit 15 can be realized by a hardware processor. The control unit 15 may also be realized by hard-wired logic. As illustrated in FIG. 1, the control unit 15 includes a reception unit 15A, a registration unit 15B, an extraction unit 15C, and an output unit 15D.

The reception unit 15A is a processing unit that receives various requests from the client terminal 30. As one aspect, the reception unit 15A can receive a registration request of measure information including a measure flow from the client terminal 30. As another aspect, the reception unit 15A can receive an extraction request of a difference in a draft and an existing measure.

The registration unit 15B is a processing unit that registers measure information in the measure DB 13A of the storage unit 13. Merely as an example, when a registration request of measure information is received by the reception unit 15A, the registration unit 15B registers the measure information in the measure DB 13A.

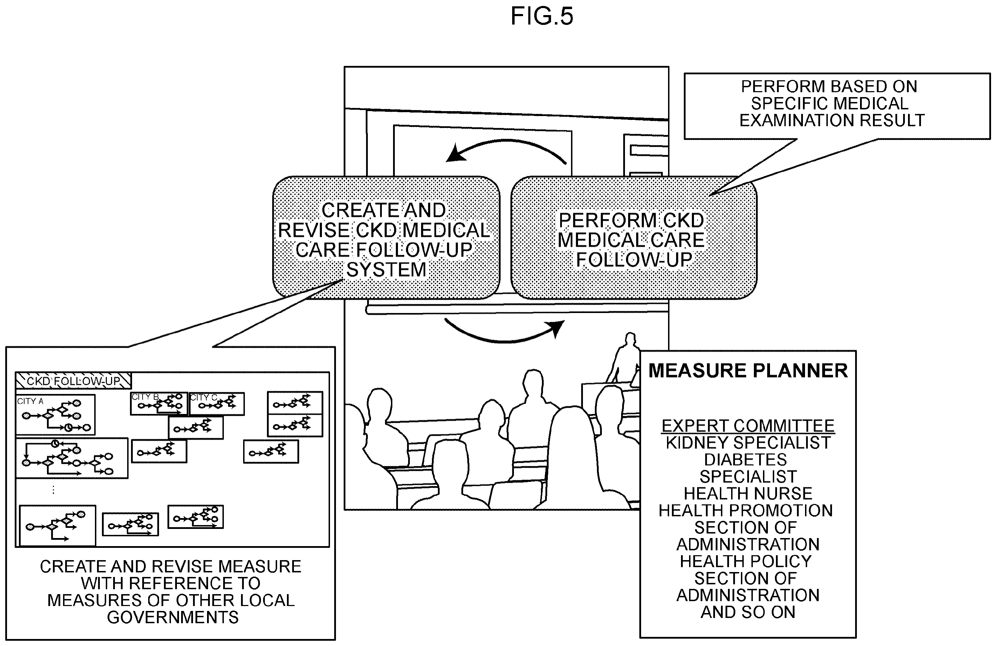

Hereinafter, an example in which a measure flow related to medical care follow-up of chronic kidney disease, so-called CKD is planned will be described as merely an example of usage scenes of measure planning. FIG. 5 is a diagram illustrating an example of a usage scene of measure planning. As illustrated in FIG. 5, a medical care follow-up system of CKD may be created by an expert committee based on the nephropathy aggravation prevention project. Such an expert committee corresponds to an example of a measure planner, and people such as a kidney specialist, a diabetes specialist, a health nurse, a health promotion section of the administration, and a health policy section of the administration may belong to the committee. For example, the expert committee creates and revises a measure flow with reference to past business results and measures of other local governments every predetermined cycle, for example, every year. According to a condition of a medical examination result set in the measure flow created or revised as such, CKD medical care follow-up is performed by allocating a resident to an intervention in which a measure corresponding to the medical examination result of the resident is formulated, the resident being a target of the measure.

Here, the measure information received from the registration request may include a measure flow created or revised by the expert committee and resource information on an organization to which the measure planner of the measure flow belongs, such as the local government. The measure information may include an evaluation value of an intervention node for each of the intervention nodes of the measure flow, for example, an actual value of an index such as an effect or a cost.

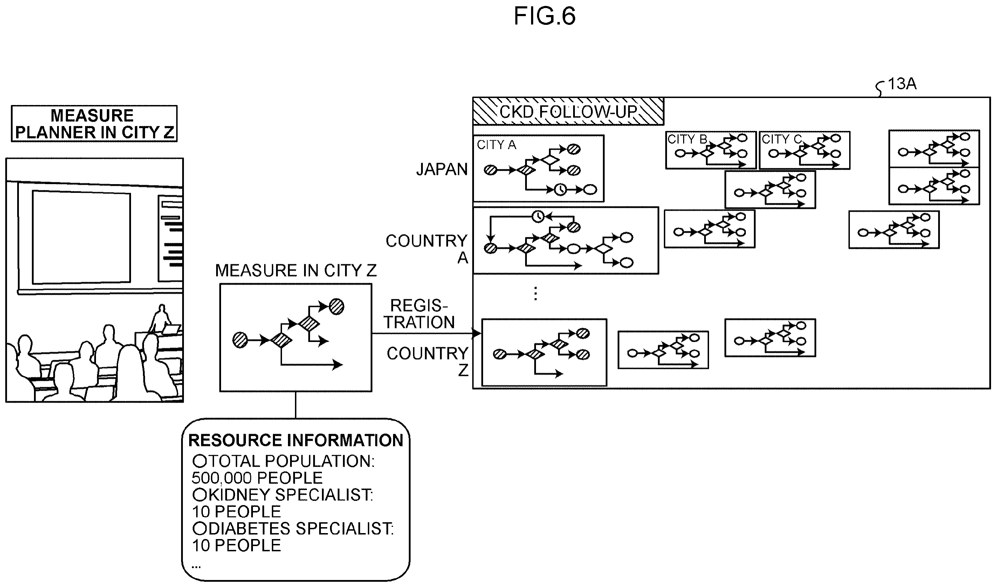

FIG. 6 is a schematic diagram illustrating a registration example of measure information in the measure DB 13A. FIG. 6 illustrates an example in which a registration request of measure information is received from a measure planner in a city Z. As illustrated in FIG. 6, the measure information includes the measure flow regarding CKD medical care follow-up in the city Z and resource information of the city Z. The resource information includes information such as a total population "500,000 people", kidney specialists "10 people", and diabetes specialists "10 people". The measure information received from the registration request as such is additionally registered in the measure DB 13A.

When measure flows are registered in the measure DB 13A as such, the registration unit 15B can extract a condition to be allocated to an intervention node for each of the intervention nodes corresponding to a service implementation component, for example, "intervention" among the measure flows, and register a set of an intervention node and an allocation condition thereof. Such an intervention node may be identified by referring to metainformation in which a type of a node is associated with each of the nodes included in the measure flow, or a node positioned at the end on the measure flow that is an oriented graph may be identified as an intervention node.

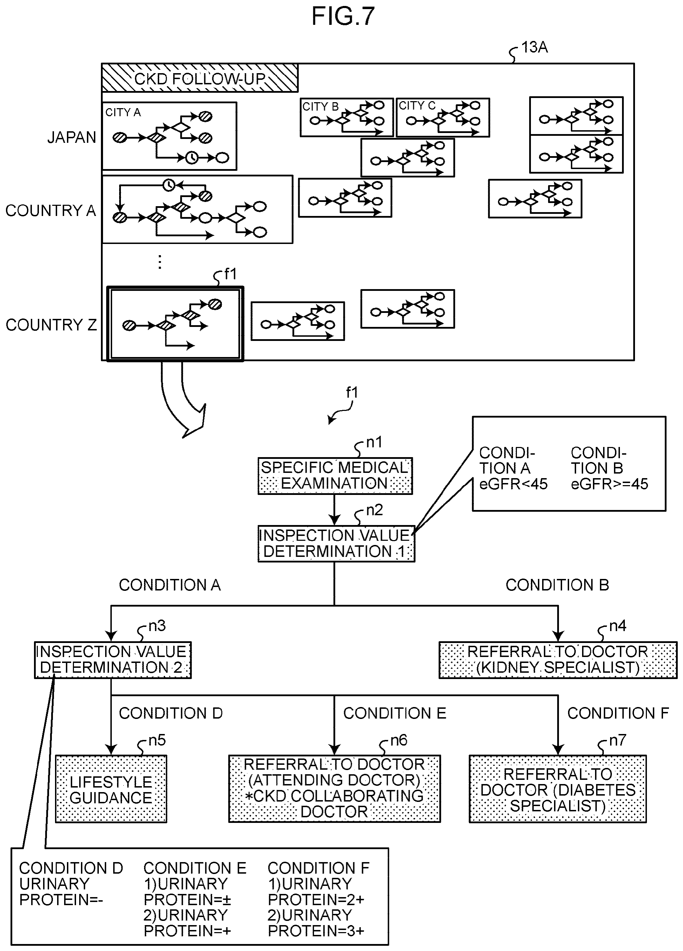

Hereinafter, a set of an intervention node and an allocation condition may be referred to as "intervention condition set". An example in which an intervention condition set is extracted from a measure flow f1 illustrated in FIG. 7 will be described.

FIG. 7 is a diagram illustrating a specific example of the measure flow. FIG. 7 illustrates the measure flow f1 in the city Z in a country Z as an example of a measure flow registered in the measure DB 13A. As illustrated in FIG. 7, the measure flow f1 includes a total of seven nodes n1 to n7. Among the seven nodes, five nodes of the node n1 and the nodes n4 to n7 are nodes corresponding to service implementation components provided to a resident.

For example, a service of performing specific medical examination for the resident is set in the node n1 "specific medical examination". In the node n4 "referral to a doctor (kidney specialist)", a service of introducing a kidney specialist to the resident is set. In the node n5 "lifestyle guidance", a service of providing health guidance for improving a lifestyle of the resident is set. In the node n6 "referral to a doctor (attending doctor)", a service of introducing an attending doctor to the resident is set. In the node n7 "referral to a doctor (diabetes specialist)", a service of introducing a diabetes specialist to the resident is set. Among the five nodes, four nodes including the node n4 "referral to a doctor (kidney specialist)", the node n5 "lifestyle guidance", the node n6 "referral to a doctor (attending doctor)", and the node n7 "referral to a doctor (diabetes specialist)" correspond to intervention nodes.

The node n2 "inspection value determination 1" and the node n3 "inspection value determination 2" are conditional branch nodes that branch which intervention on the measure flow is to be allocated to the resident by conditions. For example, in the conditional branch node n2 "inspection value determination 1", whether an inspection value "eGFR" from the medical examination result obtained in the node n1 "specific medical examination" corresponds to any of a condition A of the inspection value "eGFR" being less than 45 and a condition B of the inspection value "eGFR" being 45 or more is determined. In the conditional branch node n3 "inspection value determination 2", whether an inspection value "urinary protein" corresponds to any of a condition D of the inspection value "urinary protein" being negative **"-",** a condition E of the inspection value "urinary protein" being trace positive "±" or positive "+", and a condition F of the inspection value "urinary protein" being positive "2+" or positive "3+" is determined.

For each of the intervention nodes included in the measure flow f1, by setting an intervention node as a starting point and tracing back conditional branch nodes in a direction opposite to an edge direction, an intervention condition set can be extracted.

For example, in an example of the intervention node n4 "referral to a doctor (kidney specialist)", by tracing back from the intervention node n4 "referral to a doctor (kidney specialist)" to the conditional branch node n2 "inspection value determination 1", the condition B "eGFE ≥ 45" is extracted. Then, there are no conditional branches even when tracing back further than the conditional branch node n2 "inspection value determination 1". As a result, the condition B "eGFE ≥ 45" is extracted as the allocation condition.

In an example of the intervention node n5 "lifestyle guidance", by tracing back from the intervention node n5 "lifestyle guidance" to the conditional branch node n3 "inspection value determination 2", the condition D "urinary protein = -" is extracted. The condition A "eGFE < 45" is traced by tracing back from the conditional branch node n3 "inspection value determination 2" to the conditional branch node n2 "inspection value determination 1". Then, there are no conditional branches even when tracing back further than the conditional branch node n2 "inspection value determination 1". As a result, an AND condition "eGFE < 45 AND urinary protein = -" of the condition A and the condition D is extracted as the allocation condition.

In an example of the intervention node n6 "referral to a doctor (attending doctor)", by tracing back from the intervention node n6 "referral to a doctor (attending doctor)" to the conditional branch node n3 "inspection value determination 2", the condition E "urinary protein = ± OR urinary protein = +" is extracted. The condition A "eGFE < 45" is traced by tracing back from the conditional branch node n3 "inspection value determination 2" to the conditional branch node n2 "inspection value determination 1". Then, there are no conditional branches even when tracing back further than the conditional branch node n2 "inspection value determination 1". As a result, an AND condition "eGFE < 45 AND (urinary protein = ± OR urinary protein = +)" of the condition A and the condition E is extracted as the allocation condition.

In an example of the intervention node n7 "referral to a doctor (diabetes specialist)", by tracing back from the intervention node n7 "referral to a doctor (diabetes specialist)" to the conditional branch node n3 "inspection value determination 2", the condition F "urinary protein = 2+ OR urinary protein = 3+" is extracted. The condition A "eGFE < 45" is traced by tracing back from the conditional branch node n3 "inspection value determination 2" to the conditional branch node n2 "inspection value determination 1". Then, there are no conditional branches even when tracing back further than the conditional branch node n2 "inspection value determination 1". As a result, an AND condition "eGFE < 45 AND (urinary protein = 2+ OR urinary protein = 3+)" of the condition A and the condition F is extracted as the allocation condition.

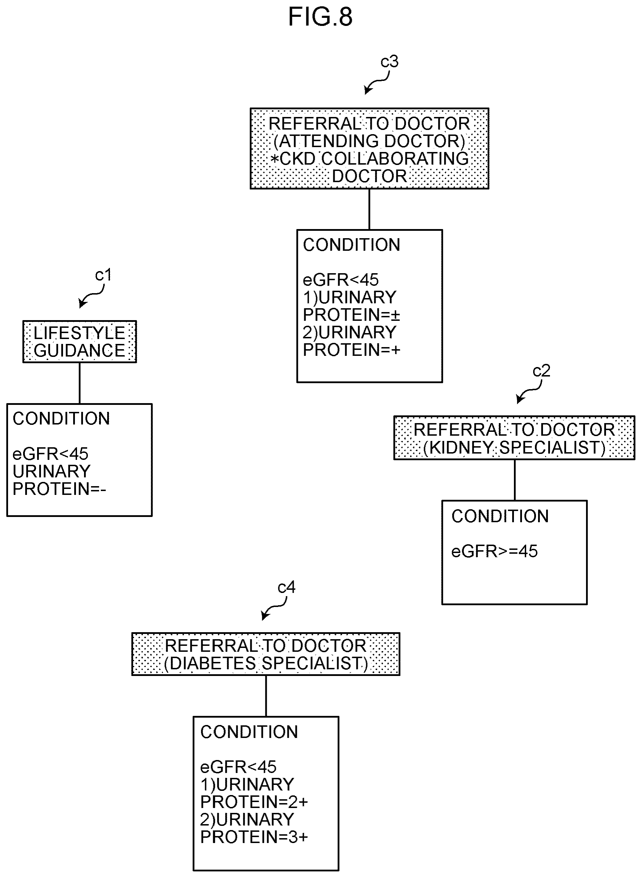

As a result, four intervention condition sets c1 to c4 illustrated in FIG. 8 are extracted from the measure flow f1 illustrated in FIG. 7. FIG. 8 is a diagram illustrating an example of the intervention condition sets. As illustrated in FIG. 8, the intervention node "lifestyle guidance" is associated with the allocation condition "eGFE < 45 AND urinary protein = -" in the intervention condition set c1. The intervention node "referral to a doctor (kidney specialist)" is associated with the allocation condition "eGFE ≥ 45" in the intervention condition set c2. The intervention node "referral to a doctor (attending doctor)" is associated with the allocation condition "eGFE < 45 AND (urinary protein = ± OR urinary protein = +)" in the intervention condition set c3. The intervention node "referral to a doctor (diabetes specialist)" is associated with the allocation condition "eGFE < 45 AND (urinary protein = 2+ OR urinary protein = 3+)" in the intervention condition set c4. As such, the intervention condition sets extracted from the measure flow f1 can be added to the measure information and be registered in the measure DB 13A.

Referring back to the description in FIG. 1, the extraction unit 15C is a processing unit that extracts a difference in interventions associated with the same allocation condition and a difference in allocation conditions associated with the same intervention between the intervention condition set corresponding to the draft and the intervention condition set corresponding to the existing measure.

Merely as an example, the extraction unit 15C can start processing when an extraction request of a difference in a draft and an existing measure is received by the reception unit 15A. Here, as a draft α designated in the extraction request, an existing measure already registered in the measure DB 13A may be designated or a measure not registered in the measure DB 13A may be designated by the client terminal 30. Here, when a measure not registered in the measure DB 13A is received as the draft α, it is also possible to extract a difference in the draft and the existing measure after measure information including the measure flow, the resource information, and the intervention condition set of the draft α is registered in the measure DB 13A.

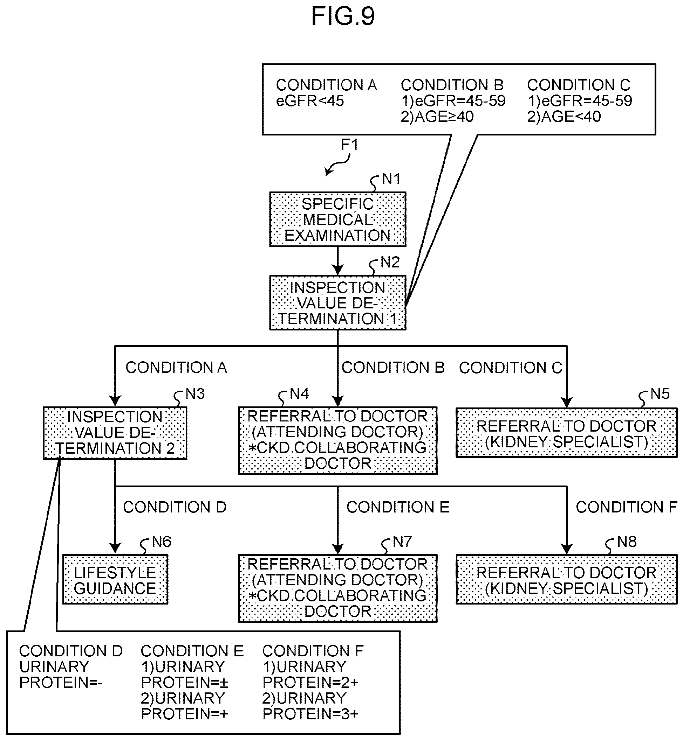

Hereinafter, merely as an example, a usage scene in which a measure planner in a city N makes an extraction request designating a measure flow F1 illustrated in FIG. 9 as the draft α via the client terminal 30 will be described.

FIG. 9 is a diagram illustrating a specific example of a draft flow. FIG. 9 illustrates the measure flow F1 in the city N as an example of a draft flow α. As illustrated in FIG. 9, the measure flow F1 includes a total of eight nodes including nodes N1 to N7. Among the eight nodes, six nodes including the node N1 and the nodes N4 to N8 are nodes corresponding to service implementation components provided to a resident. Among the six nodes, five nodes including the nodes N4 and N7 "referral to a doctor (attending doctor)", the nodes N5 and N8 "referral to a doctor (kidney specialist)", and the node N6 "lifestyle guidance" correspond to intervention nodes.

The node N2 "inspection value determination 1" and the node N3 "inspection value determination 2" are conditional branch nodes that branch which intervention on the measure flow is to be allocated to the resident by conditions. For example, in the conditional branch node N2 "inspection value determination 1", whether a medical examination result obtained in the node N1 "specific medical examination" corresponds to any of a condition A, a condition B, and a condition C is determined. The condition A corresponds to the inspection value "eGFR" being less than 45. The condition B corresponds to the inspection value "eGFR" being 45 or more and 59 or less and the age being 40 or older. The condition C corresponds to the inspection value "eGFR" being 45 or more and 59 or less and the age being less than 40. In the conditional branch node N3 "inspection value determination 2", whether a medical examination result obtained in the node N1 "specific medical examination" corresponds to any of a condition D, a condition E, and a condition F is determined. The condition D corresponds to the inspection value "urinary protein" being negative "-". The condition E corresponds to the inspection value "urinary protein" being trace positive "±" or positive "+". The condition F corresponds to the inspection value "urinary protein" being positive "2+" or positive "3+".

For each of the intervention nodes included in the measure flow F1, by setting an intervention node as a starting point and tracing back conditional branch nodes in a direction opposite to an edge direction, an intervention condition set can be extracted.

For example, there are two intervention nodes N4 and N7 as "referral to a doctor (attending doctor)". Here, in an example of the intervention node N4 "referral to a doctor (attending doctor)", by tracing back from the intervention node N4 "referral to a doctor (attending doctor)" to the conditional branch node N2 "inspection value determination 1", the condition B "eGFR = 45 to 59 AND age ≥ 40" is extracted. Then, there are no conditional branches even when tracing back further than the conditional branch node N2 "inspection value determination 1". As a result, the condition B "eGFR = 45 to 59 AND age ≥ 40" is extracted as the allocation condition. Meanwhile, in an example of the intervention node N7 "referral to a doctor (attending doctor)", by tracing back from the intervention node N7 "referral to a doctor (attending doctor)" to the conditional branch node N3 "inspection value determination 2", the condition E "urinary protein = ± OR urinary protein = +" is extracted. The condition A "eGFE < 45" is traced by tracing back from the conditional branch node N3 "inspection value determination 2" to the conditional branch node N2 "inspection value determination 1". Then, there are no conditional branches even when tracing back further than the conditional branch node N2 "inspection value determination 1". As a result, an AND condition "eGFE < 45 AND (urinary protein = ± OR urinary protein = +)" of the condition A and the condition E is extracted as the allocation condition.

There are two intervention nodes N5 and N8 as "referral to a doctor (kidney specialist)". Here, in an example of the intervention node N5 "referral to a doctor (kidney specialist)", by tracing back from the intervention node N5 "referral to a doctor (kidney specialist)" to the conditional branch node N2 "inspection value determination 1", the condition C "eGFR = 45 to 59 AND age < 40" is extracted. Then, there are no conditional branches even when tracing back further than the conditional branch node N2 "inspection value determination 1". As a result, the condition C "eGFR = 45 to 59 AND age < 40" is extracted as the allocation condition. Meanwhile, in an example of the intervention node N8 "referral to a doctor (kidney specialist)", by tracing back from the intervention node N8 "referral to a doctor (kidney specialist)" to the conditional branch node N3 "inspection value determination 2", the condition F "urinary protein = 2+ OR urinary protein = 3+" is extracted. The condition A "eGFE < 45" is traced by tracing back from the conditional branch node N3 "inspection value determination 2" to the conditional branch node N2 "inspection value determination 1". Then, there are no conditional branches even when tracing back further than the conditional branch node N2 "inspection value determination 1". As a result, an AND condition "eGFE < 45 AND (urinary protein = 2+ OR urinary protein = 3+)" of the condition A and the condition F is extracted as the allocation condition.

In an example of the intervention node N6 "lifestyle guidance", by tracing back from the intervention node N6 "lifestyle guidance" to the conditional branch node N3 "inspection value determination 2", the condition D "urinary protein = -" is extracted. The condition A "eGFE < 45" is traced by tracing back from the conditional branch node N3 "inspection value determination 2" to the conditional branch node N2 "inspection value determination 1". Then, there are no conditional branches even when tracing back further than the conditional branch node N2 "inspection value determination 1". As a result, an AND condition "eGFE < 45 AND urinary protein = -" of the condition A and the condition D is extracted as the allocation condition.

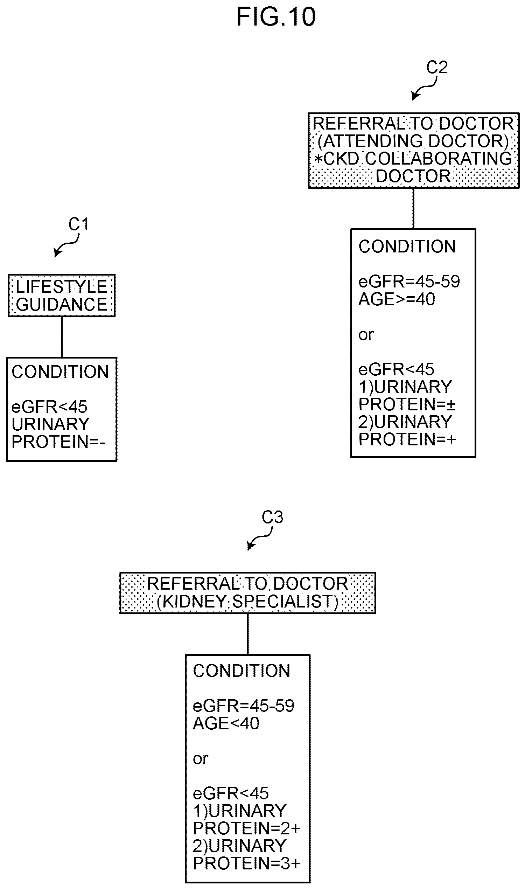

As a result, three intervention condition sets C1 to C3 illustrated in FIG. 10 are extracted from the measure flow F1 illustrated in FIG. 9. FIG. 10 is a diagram illustrating an example of the intervention condition sets. As illustrated in FIG. 8, the intervention node "lifestyle guidance" is associated with the allocation condition "eGFE < 45 AND urinary protein = -" in the intervention condition set C1. The intervention node "referral to a doctor (attending doctor)" is associated with the allocation condition "(eGFE = 45 to 59 AND age ≥ 40) OR {eGFE < 45 AND (urinary protein = ± OR urinary protein = +)}" in the intervention condition set C2. The intervention node "referral to a doctor (kidney specialist)" is associated with the allocation condition "(eGFE = 45 to 59 AND age < 40) OR {eGFE < 45 AND (urinary protein = 2+ OR urinary protein = 3+)}" in the intervention condition set C3. As such, the intervention condition sets C1 to C3 extracted from the measure flow F1 are added to the measure information of the draft α and registered in the measure DB 13A.

When the measure information of the draft α is already registered in the measure DB 13A, such intervention condition sets C1 to C3 of the draft α can be acquired by reading the measure DB 13A. When the measure information of the draft α is not registered in the measure DB 13A, after the intervention condition sets C1 to C3 of the draft α are extracted and the measure information including the intervention condition sets C1 to C3 is registered in the measure DB 13A, extraction of a difference in the draft and the existing measure can be started.

When the intervention condition sets of the draft α are obtained as such, the extraction unit 15C executes the following processing. As one aspect, the extraction unit 15C collates the intervention condition sets of the draft α with the intervention condition sets of the existing measures stored in the measure DB 13A, and extracts a difference in intervention nodes associated with a common allocation condition. As another aspect, the extraction unit 15C collates the intervention condition sets of the draft α with the intervention condition sets of the existing measures stored in the measure DB 13A, and extracts a difference in allocation conditions associated with a common intervention node.

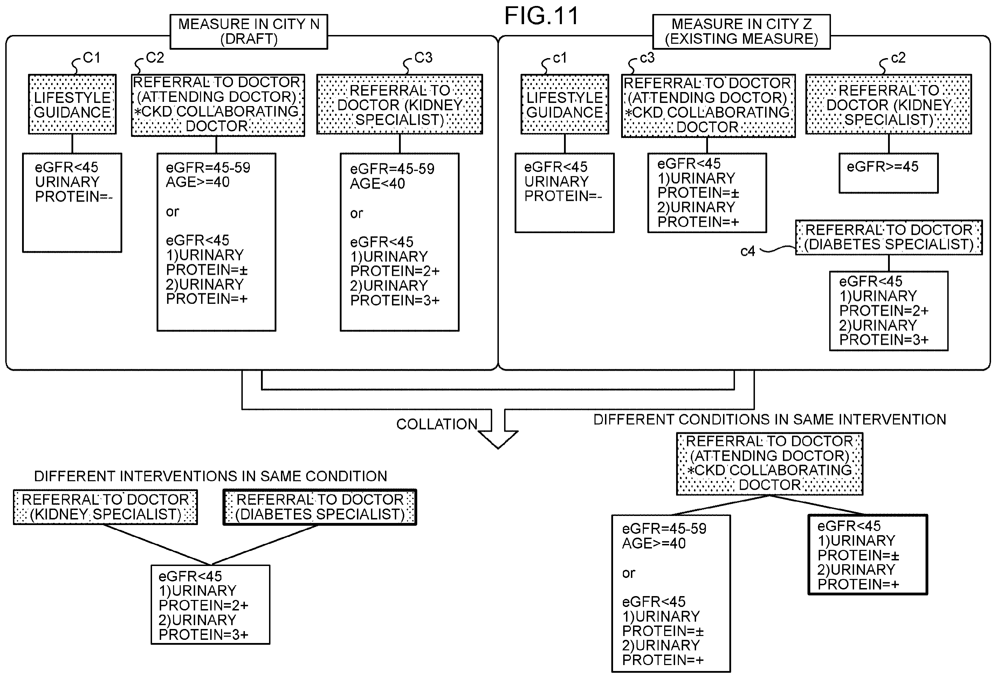

FIG. 11 is a diagram illustrating a collation example of intervention condition sets. FIG. 11 illustrates a case in which the intervention condition sets C1 to C3 (refer to FIG. 10) of the measure flow F1 in the city N that is the draft α are collated with the intervention condition sets c1 to c4 (refer to FIG. 8) of the measure flow f1 in the city Z that is the existing measure.

As illustrated in FIG. 11, an allocation condition "eGFE < 45 AND (urinary protein = 2+ OR urinary protein = 3+)" is common between the intervention condition set C3 and the intervention condition set c4. Meanwhile, the allocation condition of the intervention condition set C3 is associated with the intervention node "referral to a doctor (kidney specialist)" and the allocation condition of the intervention condition set c4 is associated with the intervention node "referral to a doctor (diabetes specialist)". As described above, since the intervention nodes associated with the common allocation condition are different, the intervention of "diabetes specialist" is extracted as a difference in the intervention nodes of the draft α and the existing measure.

The intervention node "referral to a doctor (attending doctor)" is common between the intervention condition set C2 and the intervention condition set c3. Meanwhile, the allocation condition "eGFR = 45 to 59 AND age ≥ 40 OR {eGFR < 45 AND (urinary protein = ± OR urinary protein = +)}" is associated with the intervention node of the intervention condition set C2 and the allocation condition "eGFR < 45 AND (urinary protein = ± OR urinary protein = +)" is associated with the intervention node of the intervention condition set c3. As such, the allocation conditions associated with the common intervention node are different. Therefore, "eGFR = 45 to 59 AND age ≥ 40" is extracted as a difference in the allocation conditions of the draft α and the existing measure.

In addition to such a difference in intervention nodes associated with the common allocation conditions, the extraction unit 15C can further extract a difference in resource caused by the difference in intervention nodes. The term "difference in resource" as used herein refers to a difference in resource that occurs when an intervention node associated with an allocation condition common with the draft α among the intervention nodes of the existing measure is introduced instead of an intervention node associated with the allocation condition common with the existing measure among the intervention nodes of the draft α.

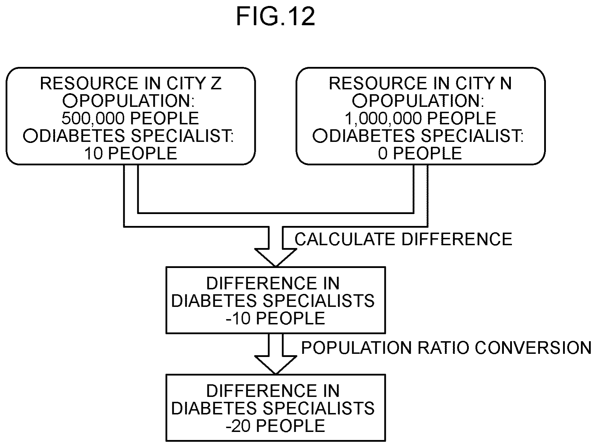

FIG. 12 is a diagram illustrating an extraction example of a difference in resource. FIG. 12 illustrates an example of extracting a difference in resource in which, based on a difference in the intervention node "referral to a doctor (kidney specialist)" of the draft α and the intervention node "referral to a doctor (diabetes specialist)" of the existing measure, the intervention node of the draft α is replaced from "referral to a doctor (kidney specialist)" to "referral to a doctor (diabetes specialist)".

Here, as illustrated in FIG. 12, from the resource information of the city N corresponding to the draft α, the number of people "0" of the resource "diabetes specialist" corresponding to the intervention node "referral to a doctor (diabetes specialist)" to be introduced is referred to. Meanwhile, from the resource information of the city Z corresponding to the existing measure, the number of people "10" of the resource "diabetes specialist" corresponding to the intervention node "referral to a doctor (diabetes specialist)" to be introduced is referred to. Then, a difference in the number of people "0" of the resource "diabetes specialist" in the city N and the number of people "10" of the resource "diabetes specialist" in the city Z is calculated. For example, by subtracting the number of people "10" of the resource "diabetes specialist" in the city Z from the number of people "0" of the resource "diabetes specialist" in the city N, a difference in resource is calculated as "-10 people".

The difference in resource "-10 people" between the city N and the city Z calculated as described above can be presented as it is, but there is a possibility that the sizes of population of the city N and the city Z are not equal to each other. Therefore, a population ratio of the city N to the city Z can be used from an aspect of converting the amount of resources to be provided for introduction in the city Z into the amount of resources to be provided for introduction in the city N. For example, the difference in resource "-10 people" between the city N and the city Z is multiplied by a ratio of the population of the city N to the population of the city Z "2 = (1,000,000 people /500,000 people)", thereby being converted into "-20 people".

Referring back to the description of FIG. 1, the output unit 15D is a processing unit that outputs various types of information to the client terminal 30. As one aspect, the output unit 15D can output, to the client terminal 30, a difference in interventions associated with the same allocation condition extracted by the extraction unit 15C as a response to an extraction request from the client terminal 30. As another aspect, the output unit 15D can output, to the client terminal 30, a difference in allocation conditions associated with the same intervention extracted by the extraction unit 15C as a response to an extraction request from the client terminal 30. At least one or both of the difference in interventions associated with the same allocation condition and the difference in allocation conditions associated with the same intervention may be output.

In addition to the difference in interventions associated with the same allocation condition and the difference in allocation conditions associated with the same intervention, the output unit 15D can also output the difference in resource extracted by the extraction unit 15C. Here, the output unit 15D may output information on the existing measure, for example, a difference in intervention nodes, a difference in allocation conditions, a difference in resource, or the like, only when the difference in resource extracted by the extraction unit 15C satisfies a constraint condition set when the extraction request is received. As a result, information on the existing measure can be output when it is possible to introduce an intervention node of the existing measure within a range within which a change of resource is allowed by an organization to which a measure planner of the draft belongs, for example, the local government.

The output unit 15D can further output, instead of the intervention node associated with the allocation condition common to the existing measure among the intervention nodes of the draft α, a difference in evaluation values when the intervention node associated with the allocation condition common to the draft α among the intervention nodes of the existing measure is introduced. For example, the output unit 15D refers to the evaluation value stored for each of the intervention nodes in the measure DB 13A, and outputs a difference in the evaluation value of the intervention node of the draft α associated with the same allocation condition and the evaluation value of the intervention node of the existing measure associated with the same allocation condition.

The output unit 15D can further output, instead of the allocation condition associated with the intervention node common to the existing measure among the allocation conditions of the draft α, a difference in evaluation values when the allocation condition associated with the intervention node common to the draft α among the allocation conditions of the existing measure is introduced. For example, the output unit 15D refers to the evaluation value stored for each of the allocation conditions in the measure DB 13A, and outputs a difference in the evaluation value of the allocation condition of the draft α associated with the same intervention node and the evaluation value of the intervention node of the existing measure associated with the same intervention node.

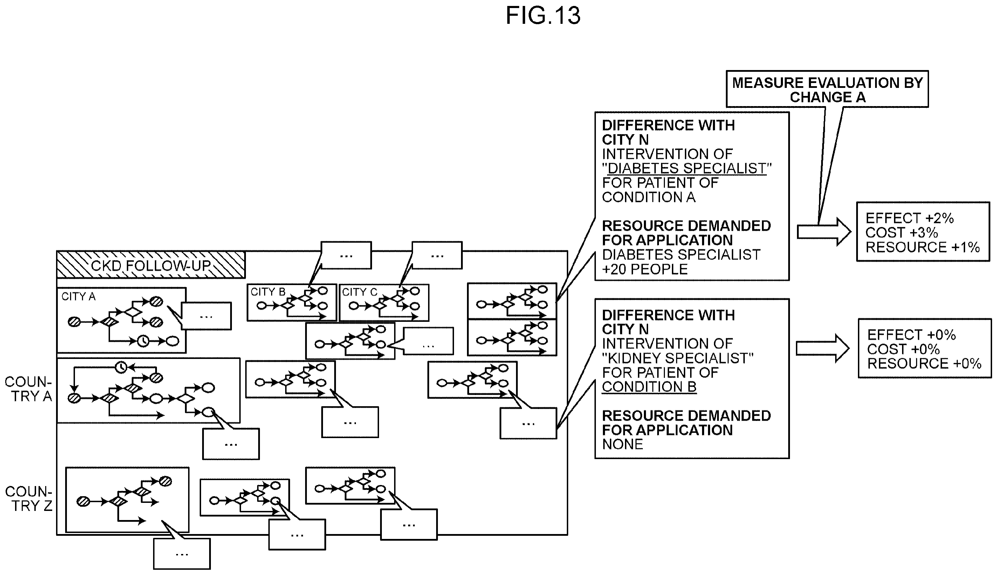

FIG. 13 is a diagram illustrating an example of items output by the output unit 15D. FIG. 13 illustrates an example in which the difference in intervention nodes illustrated in FIG. 11, the difference in allocation conditions illustrated in FIG. 11, and the difference in resource illustrated in FIG. 12 are set as output items.

As illustrated in FIG. 13, the output unit 15D can output the intervention of "diabetes specialist" for the resident corresponding to the common allocation condition "eGFE < 45 AND (urinary protein = 2+ OR urinary protein = 3+)" as a difference in intervention nodes of the draft α and the existing measure. Here, the output unit 15D can output +20 diabetes specialists as a resource demanded for the intervention of "diabetes specialist". The output unit 15D can output an effect "+2%", a cost "+3%", and a resource "+1%" as a difference in evaluation values when introducing the intervention of "diabetes specialist".

The output unit 15D can output the condition "eGFR = 45 to 59 AND age ≥ 40" for the intervention of the common intervention node "referral to a doctor (attending doctor)" as a difference in allocation conditions of the draft α and the existing measure. Here, the output unit 15D can output "none" as a resource demanded for introducing the allocation condition of the existing measure. The output unit 15D can output an effect "+0%", a cost "+0%", and a resource "+0%" as a difference in evaluation values when introducing the allocation condition of the existing measure.

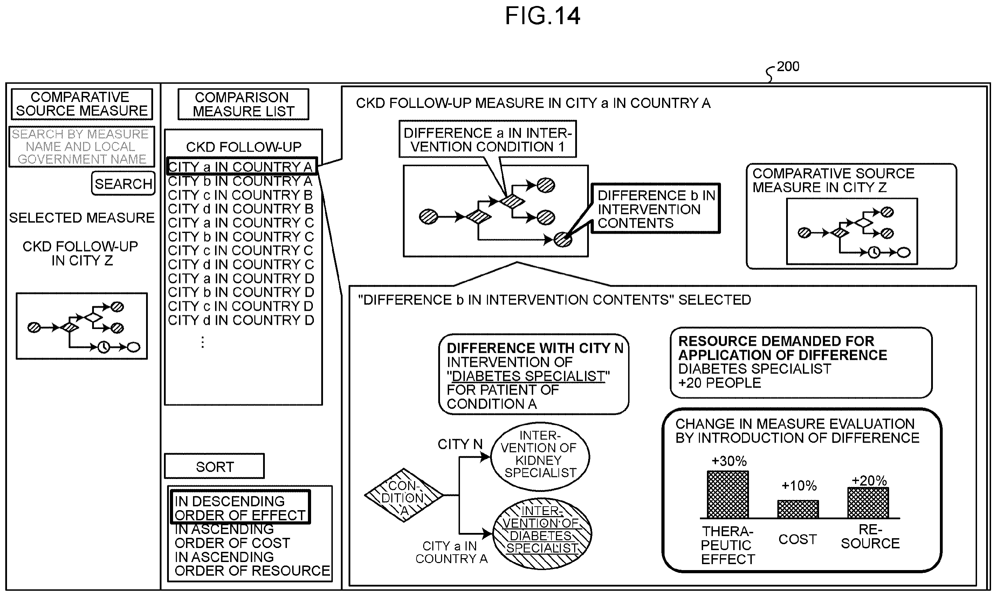

FIG. 14 is a diagram illustrating a display example of the client terminal 30. A window 200 illustrated in FIG. 14 illustrates an example in which CKD follow-up in the city Z is designated as the measure flow of the draft α. The window 200 illustrated in FIG. 14 illustrates an example in which existing measures are sorted in the descending order of the effect among the descending order of the effect, the ascending order of the cost, and the ascending order of the resource, as the sorting order of the existing measures to be compared with the draft α. The window 200 illustrated in FIG. 14 illustrates an example in which CKD follow-up in a city a in a country A is designated among the existing measures sorted in the descending order of the effect. The window 200 illustrated in FIG. 14 illustrates an example in which, from a difference a between intervention conditions and a difference b between intervention contents, the difference b between intervention contents is designated.

As illustrated in FIG. 14, as the difference b between intervention contents, an intervention node "intervention of kidney specialist" in the city N and an intervention node "intervention of diabetes specialist" in the city a in the country A that are associated with the allocation condition "condition A" common between CKD follow-up in the city Z and CKD follow-up in a city A in the country A are displayed in the window 200. Here, the window 200 further displays a resource "diabetes specialists +20" demanded for replacing the intervention node in the city N from "intervention of kidney specialist" to "intervention of diabetes specialist". The window 200 displays a difference in therapeutic effect "+30%", a difference in cost "+10%", and a difference in resource "+20%" when the intervention node in the city N is replaced from "intervention of kidney specialist" to "intervention of diabetes specialist".

### <Flow of Processing>

Next, a flow of processing of the server device 10 according to the present embodiment will be described. Here, the flow of each processing that are executed by the server device 10 will be described in the order of (1) registration processing, (2) first extraction processing, and (3) second extraction processing.

### (1) Registration Processing

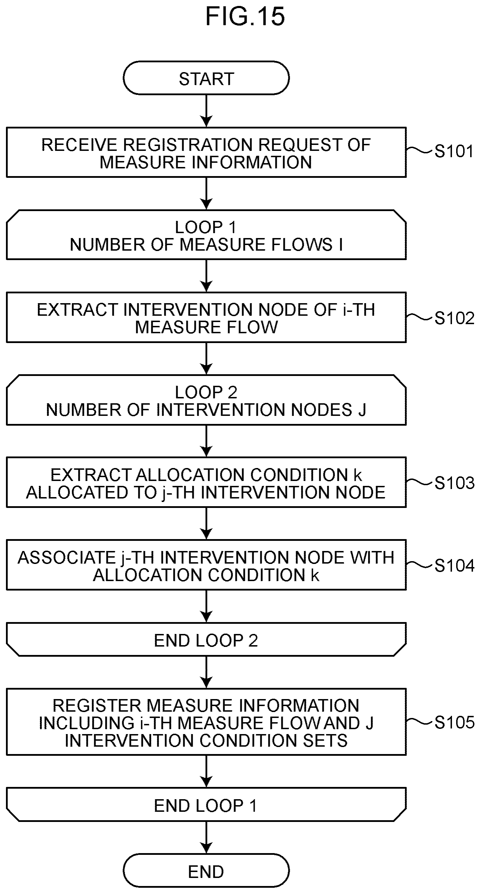

FIG. 15 is a flowchart illustrating a procedure of the registration processing. The processing can be started, merely as an example, when a registration request of measure information is received by the reception unit 15A.

As illustrated in FIG. 15, when the registration request of measure information is received by the reception unit 15A (step S101), the registration unit 15B executes loop processing 1 in which processing from the following step S102 to the following step S105 is repeated by the number of times corresponding to the number of measure flows I for which the registration request is received.

That is, the registration unit 15B extracts an intervention node included in an i-th measure flow (step S102). Then, the registration unit 15B executes loop processing 2 in which processing of the following step S103 and the following step S104 is repeated by the number of times corresponding to the number of intervention nodes J extracted in step S102.

For example, the registration unit 15B extracts an allocation condition k allocated to the j-th intervention node by tracing back in a direction opposite to the edge direction from a j-th intervention node as a starting point toward a node of a conditional branch (step S103). Then, the registration unit 15B associates the allocation condition k extracted in step S103 with the j-th intervention node (step S104).

By repeating such loop processing 2, the allocation condition k allocated to the intervention node is associated with each of the J intervention nodes, and as a result, J intervention condition sets are obtained.

Thereafter, the registration unit 15B registers i-th measure information including the i-th measure flow and the J intervention condition sets in the measure DB 13A (step S105).

By repeating such loop processing 1, I pieces of measure information are registered in the measure DB 13A.

### (2) First Extraction Processing

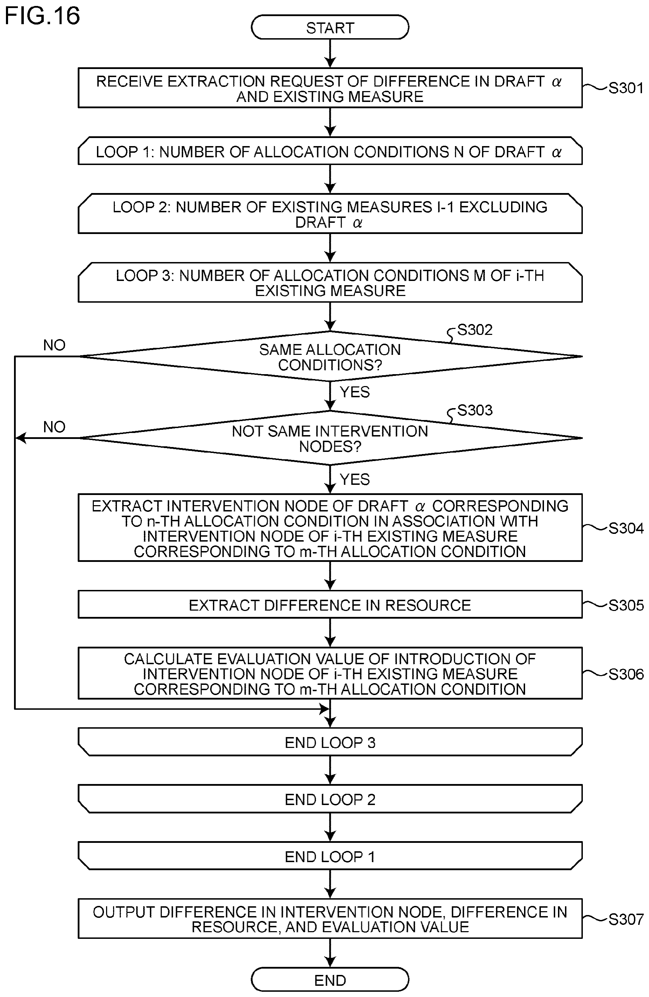

FIG. 16 is a flowchart illustrating a procedure of the first extraction processing. The processing can be started, merely as an example, when an extraction request for a difference between a draft and an existing measure is received by the reception unit 15A.

As illustrated in FIG. 16, when an extraction request for a difference between a draft and an existing measure is received by the reception unit 15A (step S301), the extraction unit 15C executes loop processing 1 in which processing from the following step S302 to the following step S306 is repeated by the number of times corresponding to the number of allocation conditions N included in the intervention condition set of the draft α.

The loop processing 1 may include loop processing 2 in which processing from the following step S302 to the following step S306 is repeated by the number of times corresponding to the number of existing measures I-1 excluding the draft α among the existing measures included in the measure DB 13A in an n-th allocation condition included in the intervention condition set of the draft α.

The loop processing 2 may include loop processing 3 in which processing from the following step S302 to the following step S306 is repeated by the number of times corresponding to the number of allocation conditions M included in the intervention condition set of an i-th existing measure.

That is, the extraction unit 15C determines whether the n-th allocation condition included in the intervention condition set of the draft α is the same as an m-th allocation condition included in the intervention condition set of the i-th existing measure (step S302).

Here, when the n-th allocation condition and the m-th allocation condition are the same (Yes in step S302), the extraction unit 15C further determines whether the intervention node of the draft α corresponding to the n-th allocation condition and the intervention node of the i-th existing measure corresponding to the m-th allocation condition are not the same (step S303).

Here, when the intervention node of the draft α corresponding to the n-th allocation condition is not the same as the intervention node of the i-th existing measure corresponding to the m-th allocation condition (Yes in step S303), the extraction unit 15C executes the following processing. That is, the extraction unit 15C extracts the intervention node of the draft α corresponding to the n-th allocation condition and the intervention node of the i-th existing measure corresponding to the m-th allocation condition in association with each other (step S304).

Subsequently, the extraction unit 15C further extracts a difference in resource caused by introducing the intervention node of the i-th existing measure corresponding to the m-th allocation condition (step S305). The extraction unit 15C calculates an evaluation value of the introduction of the intervention node of the i-th existing measure corresponding to the m-th allocation condition (step S306).

Then, the output unit 15D outputs the difference in intervention node, the difference in resource, and the evaluation value obtained as a result of the loop processing 1 to the loop processing 3 to the client terminal 30 (step S307), and ends the processing.

### (3) Second Extraction Processing

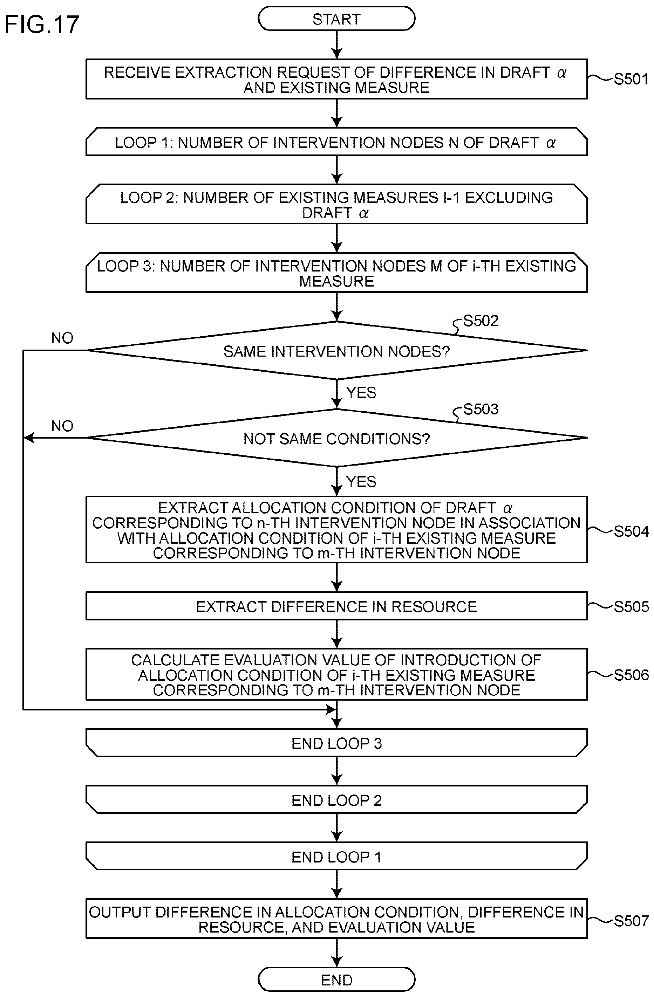

FIG. 17 is a flowchart illustrating a procedure of the second extraction processing. The processing can be started, merely as an example, when an extraction request for a difference between a draft and an existing measure is received by the reception unit 15A.

As illustrated in FIG. 17, when an extraction request for a difference between a draft and an existing measure is received by the reception unit 15A (step S501), the extraction unit 15C executes loop processing 1 in which processing from the following step S502 to the following step S506 is repeated by the number of times corresponding to the number of intervention nodes N included in the intervention condition set of the draft α.

The loop processing 1 may include loop processing 2 in which processing from the following step S302 to the following step S306 is repeated by the number of times corresponding to the number of existing measures I-1 excluding the draft α among the existing measures included in the measure DB 13A in an n-th intervention node included in the intervention condition set of the draft α.

The loop processing 2 may include loop processing 3 in which processing from the following step S302 to the following step S306 is repeated by the number of times corresponding to the number of intervention nodes M included in the intervention condition set of an i-th existing measure.

That is, the extraction unit 15C determines whether the n-th intervention node included in the intervention condition set of the draft α is the same as an m-th intervention node included in the intervention condition set of the i-th existing measure (step S502).

Here, when the n-th intervention node and the m-th intervention node are the same (Yes in step S502), the extraction unit 15C further determines whether the allocation condition of the draft α corresponding to the n-th intervention node and the allocation condition of the i-th existing measure corresponding to the m-th intervention node are not the same (step S503).

Here, when the allocation condition of the draft α corresponding to the n-th intervention node is not the same as the allocation condition of the i-th existing measure corresponding to the m-th intervention node (Yes in step S503), the extraction unit 15C executes the following processing. That is, the extraction unit 15C extracts the allocation condition of the draft α corresponding to the n-th intervention node and the allocation condition of the i-th existing measure corresponding to the m-th intervention node in association with each other (step S504).

Subsequently, the extraction unit 15C further extracts a difference in resource caused by introducing the allocation condition of the i-th existing measure corresponding to the m-th intervention node (step S505). The extraction unit 15C calculates an evaluation value of the introduction of the allocation condition of the i-th existing measure corresponding to the m-th intervention node (step S506).

Then, the output unit 15D outputs the difference in allocation condition, the difference in resource, and the evaluation value obtained as a result of the loop processing 1 to the loop processing 3 to the client terminal 30 (step S507), and ends the processing.

### <One Aspect of Effect>

As described above, the server device 10 according to the present embodiment collates a set of an intervention node and a condition allocated to an intervention node between a draft measure flow and a reference measure flow, and extracts a difference in intervention nodes associated with a common condition. As a result, a difference in measure flows between a draft and a similar measure is extracted, so that it is possible to present a material for determining whether introduction of a measure is easy or difficult. Therefore, according to the server device 10 of the present embodiment, it is possible to present easiness of introduction of a measure.

### <Second Embodiment>

Although the embodiment related to the disclosed device is described so far, the present invention may be implemented in various different forms other than the above-described embodiment. Therefore, other embodiments included in the present invention will be described below.

### <Distribution and Integration>

Each of the components of the devices illustrated in the drawings does not need to be physically configured as illustrated in the drawings. That is, a specific form of distribution and integration of the devices is not limited to the illustrated form, and all or a part of the devices can be functionally or physically distributed and integrated in any units according to various loads, usage conditions, and the like. For example, the reception unit 15A, the registration unit 15B, the extraction unit 15C, or the output unit 15D may be connected via a network as an external device of the server device 10. The functions of the server device 10 may be implemented by other devices including each of the reception unit 15A, the registration unit 15B, the extraction unit 15C, and the output unit 15D that are connected via a network and cooperate with each other.

### <Hardware Configuration>

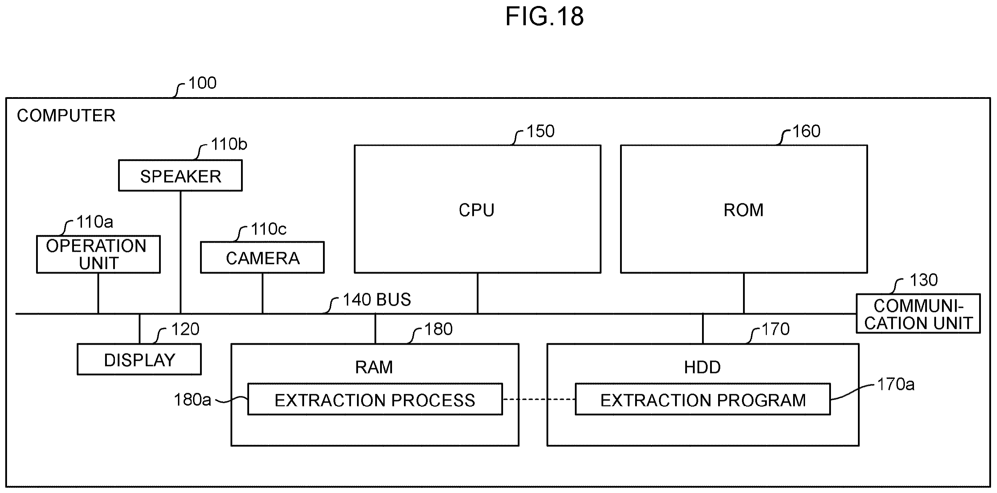

Various processing described in the embodiments can be realized by executing a program prepared in advance using a computer such as a personal computer or a workstation. Therefore, an example of a computer that executes an extraction program having the same functions as those of the first embodiment and the second embodiment will be described below with reference to FIG. 18.

FIG. 18 is a diagram illustrating a hardware configuration example. As illustrated in FIG. 18, a computer 100 includes an operation unit 110a, a speaker 110b, a camera 110c, a display 120, and a communication unit 130. The computer 100 further includes a CPU 150, a ROM 160, an HDD 170, and a RAM 180. The units 110 to 180 are connected to each other via a bus 140.

As illustrated in FIG. 18, an extraction program 170a that exhibits a function similar to that of the reception unit 15A, the registration unit 15B, the extraction unit 15C, or the output unit 15D described in the first embodiment is stored in the HDD 170. The extraction program 170a may be integrated or separated similarly to each of the components of the reception unit 15A, the registration unit 15B, the extraction unit 15C, or the output unit 15D illustrated in FIG. 1. That is, not all of the data described in the first embodiment is stored in the HDD 170, and only data used for processing may be stored in the HDD 170.

Under such an environment, the CPU 150 reads the extraction program 170a from the HDD 170 and then loads the extraction program 170a into the RAM 180. As a result, the extraction program 170a functions as an extraction process 180a as illustrated in FIG. 18. The extraction process 180a loads various types of data read from the HDD 170 into an area allocated to the extraction process 180a in a storage area of the R_AM 180, and executes various processing using the loaded various types of data. For example, as an example of the processing executed by the extraction process 180a, the processing illustrated in FIGS. 15 to 17 and the like are included. Note that, not all the processing units described in the first embodiment operate in the CPU 150 as long as a processing unit corresponding to the processing to be executed is virtually realized.

Note that the extraction program 170a may be not stored in the HDD 170 or the ROM 160 from the beginning. For example, each program is stored in a "portable physical medium" such as a flexible disk, a so-called FD, a CD-ROM, a DVD disk, a magneto-optical disk, or an IC card inserted into the computer 100. Then, the computer 100 may acquire and execute each program from the portable physical medium. Each program may be stored in another computer, a server device, or the like connected to the computer 100 via a public line, the Internet, a LAN, a WAN, or the like, and the computer 100 may acquire and execute each program from the computer or the server device.

### Reference Signs List

- 10: SERVER DEVICE
- 11: COMMUNICATION CONTROLLER
- 13: STORAGE UNIT
- 13A: MEASURE DB
- 15: CONTROL UNIT
- 15A: RECEPTION UNIT
- 15B: REGISTRATION UNIT
- 15C: EXTRACTION UNIT
- 15D: OUTPUT UNIT
- 30: CLIENT TERMINAL

## Claims

1. An extraction method of causing a computer to execute processing of,
upon acquiring a first measure that is a measure including a conditional branch and a node coupled by an oriented edge and a first node condition set of the first measure that is a node condition set in which a node is associated with a condition allocated to the node, referring to a storage unit that stores a second measure and a second node condition set of the second measure and extracting a difference in nodes associated with the same condition between the first measure and the second measure.

2. The extraction method according to claim 1, wherein the processing of extracting includes processing of, upon acquiring the first measure and the first node condition set, referring to the storage unit that further stores a resource of the second measure and extracting the difference in nodes associated with the same condition between the first measure and the second measure and a difference in resource caused by the difference in nodes.

3. The extraction method according to claim 2, wherein the computer further executes processing of:
determining, upon acquiring a constraint condition for a resource of the first measure, whether the difference in resource extracted by the processing of extracting satisfies the constraint condition, and
outputting, upon determining that the constraint condition is satisfied, the difference in resource and the second measure from which the difference in resource is extracted.

4. The extraction method according to claim 1, wherein the processing of extracting includes processing of, upon acquiring the first measure and the first node condition set, referring to the storage unit and extracting the difference in nodes associated with the same condition between the first measure and the second measure and a difference in conditions associated with the same node between the first measure and the second measure.

5. The extraction method according to claim 1, wherein the computer further executes processing of, upon acquiring the first measure and the first node condition set, referring to the storage unit that further stores an evaluation value of each of the nodes and outputting an evaluation value of a node of the second measure from which difference is extracted in the processing of extracting.

6. An extraction method of causing a computer to execute processing of,
upon acquiring a first measure that is a measure including a conditional branch and a node coupled by an oriented edge and a first node condition set of the first measure that is a node condition set in which a node is associated with a condition allocated to the node, referring to a storage unit that stores a second measure and a second node condition set of the second measure and extracting a difference in conditions associated with the same node between the first measure and the second measure.

7. An information processing apparatus comprising a control unit configured to
execute processing of, upon acquiring a first measure that is a measure including a conditional branch and a node coupled by an oriented edge and a first node condition set of the first measure that is a node condition set in which a node is associated with a condition allocated to the node, referring to a storage unit that stores a second measure and a second node condition set of the second measure and extracting a difference in nodes associated with the same condition between the first measure and the second measure.

8. The information processing apparatus according to claim 7, wherein the processing of extracting includes processing of, upon acquiring the first measure and the first node condition set, referring to the storage unit that further stores a resource of the second measure and extracting the difference in nodes associated with the same condition between the first measure and the second measure and a difference in resource caused by the difference in nodes.

9. The information processing apparatus according to claim 8, wherein the control unit further executes processing of:
determining, upon acquiring a constraint condition for a resource of the first measure, whether the difference in resource extracted by the processing of extracting satisfies the constraint condition, and
outputting, upon determining that the constraint condition is satisfied, the difference in resource and the second measure from which the difference in resource is extracted.

10. The information processing apparatus according to claim 7, wherein the processing of extracting includes processing of, upon acquiring the first measure and the first node condition set, referring to the storage unit and extracting the difference in nodes associated with the same condition between the first measure and the second measure and a difference in conditions associated with the same node between the first measure and the second measure.

11. The information processing apparatus according to claim 7, wherein the control unit further executes processing of, upon acquiring the first measure and the first node condition set, referring to the storage unit that further stores an evaluation value of each of the nodes and outputting an evaluation value of a node of the second measure from which difference is extracted in the processing of extracting.

12. An extraction program that causes a computer to execute processing of,
upon acquiring a first measure that is a measure including a conditional branch and a node coupled by an oriented edge and a first node condition set of the first measure that is a node condition set in which a node is associated with a condition allocated to the node, referring to a storage unit that stores a second measure and a second node condition set of the second measure and extracting a difference in nodes associated with the same condition between the first measure and the second measure.

13. The extraction program according to claim 12, wherein the processing of extracting includes processing of, upon acquiring the first measure and the first node condition set, referring to the storage unit that further stores a resource of the second measure and extracting the difference in nodes associated with the same condition between the first measure and the second measure and a difference in resource caused by the difference in nodes.

14. The extraction program according to claim 13, further causing the computer to execute processing of:
determining, upon acquiring a constraint condition for a resource of the first measure, whether the difference in resource extracted by the processing of extracting satisfies the constraint condition, and
outputting, upon determining that the constraint condition is satisfied, the difference in resource and the second measure from which the difference in resource is extracted.

15. The extraction program according to claim 12, wherein the processing of extracting includes processing of, upon acquiring the first measure and the first node condition set, referring to the storage unit and extracting the difference in nodes associated with the same condition between the first measure and the second measure and a difference in conditions associated with the same node between the first measure and the second measure.

16. The extraction program according to claim 12, further causing the computer to execute processing of, upon acquiring the first measure and the first node condition set, referring to the storage unit that further stores an evaluation value for each of the nodes and outputting an evaluation value of a node of the second measure from which the difference is extracted in the processing of extracting.
